# FASCICULE DE BREVET EUROPEEN

(11) **EP 2 388 130 B1**
(45) Date de publication et mention de la délivrance du brevet: **01.07.2015**
(21) Numéro de dépôt: 11166265.6
(22) Date de dépôt: 16.05.2011
(51) Int. Cl.: B29C 70/22, B29C 70/88, B64C 3/26, B29C 70/30

(54) **Pièce composite structurale**
Verbundbauteil
Composite structural part

(30) Priorité: 20.05.2010 FR 1053922
(43) Date de publication de la demande: 23.11.2011
(73) Titulaire: Airbus Operations (S.A.S.), 31060 Toulouse (FR)
(72) Inventeur: Soula, Denis, 31300 Toulouse (FR); Guillemaut, Julien, 31400 Toulouse (FR)
(74) Mandataire: Gicquel, Olivier Yves Gérard

(56) Documents cités:
- EP-A1- 1 840 775
- WO-A1-00/34031
- WO-A1-2004/001115
- WO-A1-2009/133382
- US-A- 4 606 961
- US-A1- 2005 163 975
- ADAMS D B ET AL: "OPTIMIZATION AND BLENDING OF COMPOSITE LAMINATES USING GENETIC ALGORITHMS WITH MIGRATION", MECHANICS OF ADVANCED MATERIALS AND STRUCTURES, TAYLOR AND FRANCIS, US, vol. 10, 1 juillet 2003 (2003-07-01), pages 183-203, XP008047795, ISSN: 1537-6494, DOI: DOI:10.1080/15376490306741

## Description

L'invention concerne une pièce structurale composite à renfort fibreux et son application à la réalisation d'un caisson de voilure pour aéronef.

La rigidité d'une pièce composite par rapport à un flux d'effort dépend de l'orientation des fibres de renfort par rapport aux sollicitations auxquelles elle est soumise. Ainsi, une telle pièce, chargée par des efforts parallèles à une direction longitudinale et de sens opposés sur deux de ses faces sensiblement parallèles à ladite direction longitudinale, sera soumise globalement à un cisaillement. Or, la résistance de la pièce vis-à-vis du cisaillement est obtenue essentiellement par des fibres orientées à +/- 45° par rapport à la direction longitudinale, alors que sa rigidité vis-à-vis de cette direction longitudinale est obtenue par des fibres orientées selon une direction sensiblement parallèle à celle-ci. Ainsi, une orientation des fibres optimale pour la résistance au cisaillement de la pièce ne sera pas optimale du point de vue de sa capacité à drainer les efforts longitudinaux appliqués sur ses faces chargées. Autrement dit, la séquence optimale d'empilement de plis, lesdits plis étant caractérisés par l'orientation des fibres qu'ils comprennent, par rapport à la sollicitation globale d'une pièce composite à renfort fibreux, n'est pas optimale du point de vue de sa rigidité globale. Or, une rigidité réduite se traduit par une augmentation de la sollicitation appliquée à la pièce, laquelle augmentation est contrée par un surdimensionnement, qui lui-même génère de la masse.

Cet aspect est donc proportionnellement plus important pour les pièces de grande dimension, de forte épaisseur, fortement sollicitées et utilisées dans un domaine où les critères de masse revêtent une importance prépondérante comme dans le domaine aéronautique.

Il existe donc un besoin pour des pièces composites à renfort fibreux aptes à drainer dans tout leur volume les sollicitations qui leur sont imposées au niveau global et à résister de manière locale à ces sollicitations.

L'état de la technique le plus proche, mais également le plus connu, est illustré dans les documents US 2005/163975 A1, WO 00/34031 A1, EP 1 840 775 A1, WO 2009/133382 A1, ADAMS D B ET AL: "OPTIMIZATION AND BLENDING OF COMPOSITE LAMINATES USING GENETIC ALGORITHMS WITH MIGRATION", MECHANICS OF ADVANCED MATERIALS AND STRUCTURES, TAYLOR AND FRANCIS, US, US 4 606 961 A, et WO 2004/001115 A1, à savoir le renforcement local de la structure en fonction des contraintes afin de modifier la rigidité.

Pour résoudre les insuffisances de l'art antérieur, l'invention propose une pièce composite structurale à renfort fibreux comprenant une pluralité de plis orientés par rapport à une direction longitudinale de ladite pièce selon des directions comprenant 0°, 90° et +/-θ, la proportion relative de plis selon une de ces orientations étant variable selon une direction transversale de ladite pièce de sorte à adapter spatialement la rigidité de la pièce en fonction d'une distribution définie de sollicitations mécaniques selon cet axe transversal.

Ainsi la rigidité de la pièce est adaptée non seulement localement au système de sollicitation, mais aussi d'un point de vue global quant à sa capacité à drainer l'effort global appliqué.

Avantageusement, au moins un pli de fibres orientées selon une direction +/- θ est constitué de fibres continues s'étendant d'un bord à l'autre de la pièce sur toute la surface de celle-ci. Ces plis assurent le transfert de charge et permettent de drainer les efforts sur toute la surface de la pièce.

L'épaisseur de la pièce est constante de même que le nombre de plis constituant la stratification, seule change la proportion de plis contenant des fibres selon une ou plusieurs orientations définies. Dans ce cas, tous les plis contenant des fibres orientées selon un angle +/- θ ne peuvent être prolongés sur l'ensemble de la surface de la pièce.

Avantageusement, θ est choisi égal à 45° pour une pièce dont la sollicitation globale principale est en cisaillement.

L'invention concerne également un caisson de voilure d'aéronef comprenant :
- un panneau raidi extrados et un panneau raidi intrados ;
- un longeron constitué d'une pièce composite selon l'un quelconque des modes de réalisations précédents et s'étendant transversalement entre les panneaux intrados et extrados du caisson, la direction longitudinale du longeron étant sensiblement parallèle aux raidisseurs des panneaux extrados et intrados
- ledit longeron étant lié complètement aux panneaux intrados et extrados

Ainsi, le longeron du caisson de voilure présentera une structure optimale pour drainer des efforts longitudinaux appliqués aux panneaux raidis intrados et extrados dans l'ensemble du volume du longeron, celui-ci étant globalement sollicité en cisaillement. L'épaisseur dudit longeron peut ainsi être optimisée tout comme la masse du caisson de voilure.

Avantageusement le longeron comprend une proportion comprise entre 40 % et 50 % de fibres orientées à 0° dans des zones, dites d'extrémité, de largeur inférieure au quart de la largeur totale du longeron en partant de ses liaisons avec le panneau extrados et avec le panneau intrados.

Ainsi la proportion plus élevée de fibres orientées à 0° au voisinage des liaisons du longeron avec les panneaux extrados et intrados, essentiellement sollicités en traction/compression selon l'axe longitudinal du caisson, permet d'adapter la rigidité de celui-ci dans ces extrémités de sorte à ce qu'elle corresponde sensiblement à la rigidité des panneaux selon cette même sollicitation. Cette configuration permet de gagner de la masse non seulement sur le longeron mais également sur les panneaux, par l'influence de la rigidité accrue du longeron sur la rigidité de l'ensemble du caisson.

Avantageusement, le longeron comprend, entre les zones d'extrémité, des zones intermédiaires dans lesquelles la proportion de fibres à 0° diminue d'une zone à l'autre en allant de la zone d'extrémité vers l'axe central longitudinal du longeron. Ainsi la rigidité élevée en traction/compression sur les extrémités proches des panneaux extrados et intrados, est progressivement réduite en se rapprochant de la partie centrale du longeron où l'on retrouve un empilement de plis dont la combinaison d'orientation des fibres est favorable à la tenue au cisaillement, c'est-à-dire avec des taux de fibres sensiblement équivalents dans les quatre directions. Cette progressivité permet une meilleure résistance de la structure vis-à-vis des sollicitations appliquées dans tout le caisson. Les zones extrêmes comprenant une majorité de fibres à 0° encaissent les efforts de traction/compression lesquelles sollicitent alors très peu la zone centrale du longeron optimisée vis-à-vis des sollicitations de cisaillement.

Avantageusement, le longeron du caisson de voilure objet de l'invention comprend une zone dite centrale s'étendant de part et d'autre de l'axe central longitudinal du longeron et comprenant la même proportion de fibres dans les orientations 0°, 90° et +/-θ. Ainsi, le drapage de cette zone centrale est optimisé vis-à-vis de sollicitations de cisaillement.

Un tel caisson de voilure s'intégrera avantageusement dans un aéronef dont il réduira la masse en comparaison avec les solutions de l'art antérieur. L'épaisseur constante du longeron simplifie en outre l'installation des systèmes sur ce longeron.

L'invention sera maintenant plus précisément décrite dans le cadre de ses modes de réalisation préférés, nullement limitatifs, et des figures 1 à 11, dans lesquelles :
- Les figures 1 à 5 relatives à l'art antérieur représentent schématiquement en vue de dessus les différentes étapes de drapage d'une pièce composite ;
- les figures 6 à 8 montrent schématiquement en vue de dessus les différentes étapes de drapage d'une pièce composite selon un mode de réalisation de l'invention qui permet l'obtention d'une pièce d'épaisseur constante ;

- la figure 9, représente en vue de profil un aéronef comprenant un caisson de voilure ;
- la figure 10 représente en perspective et de face, un caisson de voilure comprenant un longeron selon un mode particulier de réalisation de l'invention ;
- et la figure 11 montre de face un longeron de caisson de voilure selon un exemple de réalisation de l'invention.

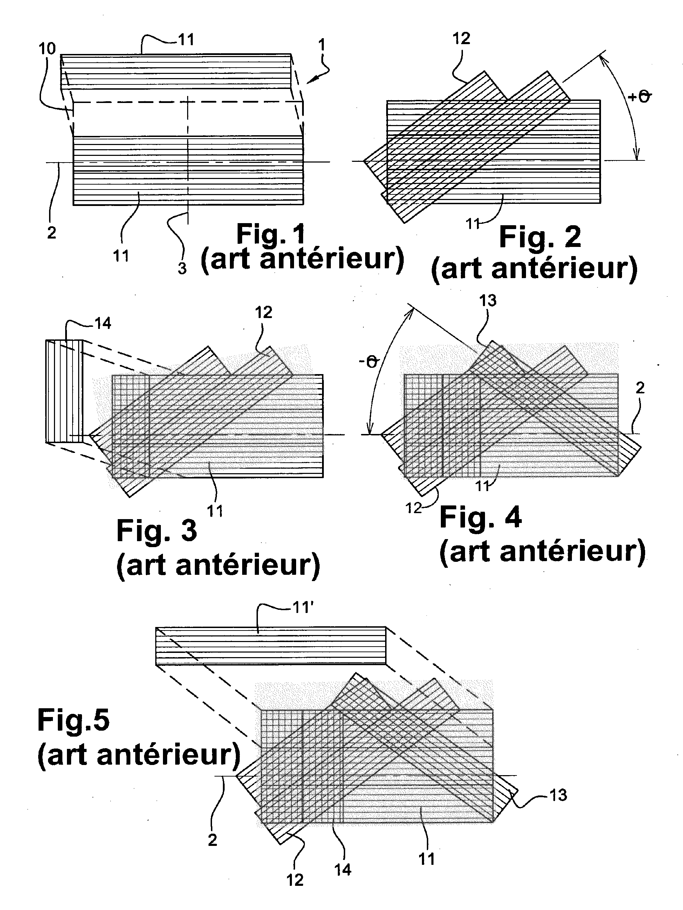

Figure 1, selon un exemple de réalisation d'une pièce composite (1) à drapage évolutif relatif à l'art antérieur, le drapage est réalisé avec des bandes ou lés (11, 12, 13, 14) contenant des fibres unidirectionnelles, par exemple pré-imprégnées d'une résine thermodurcissable, déposées sur un mandrin par exemple à l'aide d'une machine à draper automatique et découpés au contour (10) de la pièce. Dans cet exemple de réalisation un premier pli est constitué par le drapage de plusieurs lés (11) dont les fibres sont orientées parallèlement à l'axe longitudinal (2) de la pièce, dits à 0°, lesquels lés sont juxtaposés selon l'axe transversal (3) de ladite pièce.
Figure 2, toujours selon cet exemple de réalisation, un second pli est superposé à ce premier en drapant des lés unidirectionnels (12) orientés selon un angle +θ par rapport à l'axe longitudinal. Plusieurs lés sont ainsi juxtaposés de sorte à couvrir la surface de la pièce (1) (seuls deux lés sont ici représentés). Ainsi toutes les fibres contenues dans ces lés s'étendent d'un bord à un autre du contour (10) de la pièce. Les lés étant constitués de fibres pré-imprégnées d'une résine thermodurcissable, la pégosité de celle-ci assure le maintien relatif des différents plis.
Figure 3 relative au même exemple de réalisation, des lés unidirectionnels (14) sont superposés aux précédents, leurs fibres étant orientées selon une direction dite à 90°, perpendiculaire à l'axe longitudinal (2) de la pièce. Une pluralité de tels lés unidirectionnels (14) sont ainsi juxtaposés selon l'axe longitudinal (2) de sorte à couvrir la surface de la pièce (deux lés seulement sont représentés).
Figure 4, toujours selon le même exemple, un pli de fibres orientées selon une direction ―θ est superposé aux précédents en déposant des lés unidirectionnels (13), orientés selon cette direction et juxtaposés de sorte à couvrir toute la surface de la pièce.
Figure 5, un renforcement local est obtenu en déposant un lé unidirectionnel (11'), ici orienté à 0°, sur une partie de la pièce uniquement. Puis, d'autres plis sont superposés aux précédents toujours par dépose de lés unidirectionnels selon des orientations définies de sorte à recouvrir toute la surface de la pièce.

À l'issue du drapage, la zone renforcée comprendra au moins un pli de plus orienté à 0° comparativement au reste de la pièce. La proportion de plis à 0° sera donc plus élevée dans cette zone de même que sa rigidité vis-à-vis des sollicitations orientées selon l'axe longitudinal (2). La rigidité de la pièce envers ces sollicitations sera par conséquent évolutive selon un axe transversal (3).

Après drapage, selon cet exemple de réalisation, la pièce est compactée et cuite en autoclave de sorte à lui conférer ses propriétés mécaniques définitives, et si nécessaire, détourée par tout moyen connu de l'homme du métier.

La zone renforcée vis-à-vis des sollicitations longitudinales est d'épaisseur supérieure au reste de la pièce car elle comprend au moins un pli de plus. Un tel renforcement doit s'intercaler entre des plis s'étendant sur l'ensemble de la surface de la pièce de sorte que l'ondulation des fibres au passage de cette surépaisseur reste dans des tolérances acceptables.

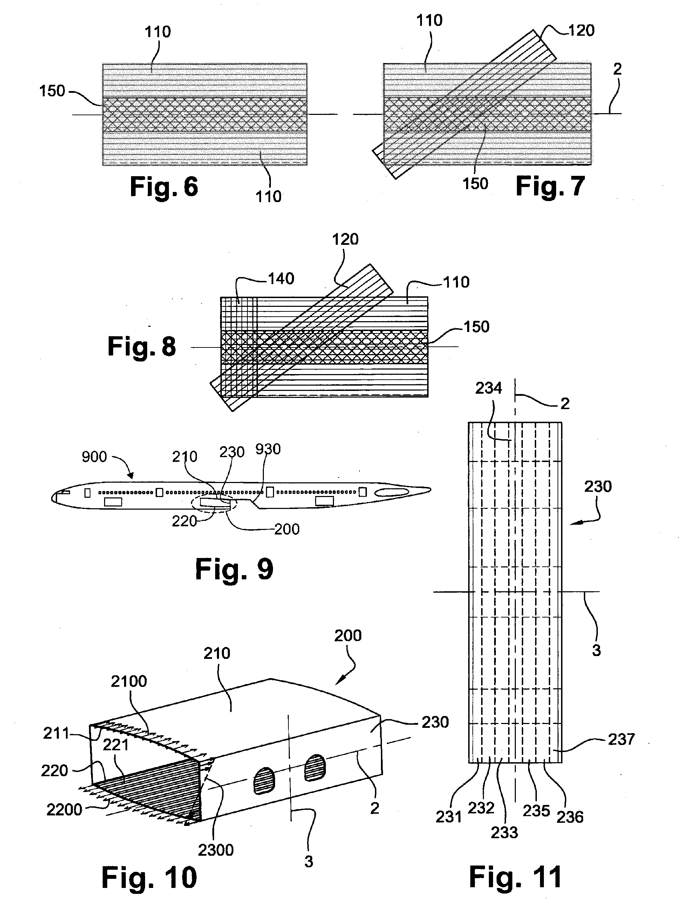

Figure 6, selon un exemple de réalisation d'une pièce composite selon l'invention, le drapage est réalisé avec des lés multi-axes (110, 140, 150), c'est-à-dire qui comprennent une superposition de plusieurs plis contenant des fibres orientées selon des directions définies. Ainsi, dans cet exemple, nullement limitatif, le lé (150) déposé dans la partie centrale de la pièce comprend des fibres orientées à 0°, et +/-θ. Les lés (110) juxtaposés de part et d'autre du précédent comprennent le même nombre de plis mais uniquement des fibres orientées à 0°. Ainsi, la proportion de fibres orientées à 0° est nettement plus importante dans les bandes disposées de part et d'autre de la bande centrale. Les lés multi-axes peuvent être constitués de fibres sèches ou de fibres pré-imprégnées d'une résine thermodurcissable ou d'une résine thermoplastique en adaptant les moyens de drapage à ces types de matériaux.

Figure 7, au moins un pli s'étendant sur toute la surface de la pièce est superposé aux précédents en drapant des lés (120), par exemple unidirectionnels, le drapage s'effectuant selon une direction en +θ et/ou en - θ.

Figure 8, des plis sont également drapés selon une direction de fibres à 90° par rapport à l'axe longitudinal, par exemple en juxtaposant des lés unidirectionnels (140) orientés selon cette direction.

Selon ce mode de drapage, les parties extérieures de la pièce comprennent une proportion plus importante de fibres orientées à 0°, mais sont de même épaisseur que le reste de la pièce. Il est indispensable que le drapage comprenne la réalisation de plis s'étendant sur toute la surface de la pièce et dont les fibres sont orientées à 90° ou à +/-θ, θ étant différent de 0°, de sorte à assurer la cohésion de la pièce selon l'axe transversal (3).

Figure 9, un caisson de voilure (200), également communément désigné par le terme de « caisson central » ou en anglais par le terme « center wing box » est un élément de fuselage d'un aéronef (900) qui connecte ledit fuselage à la voilure de l'aéronef. Selon cet exemple de réalisation le caisson central se trouve dans le fuselage en position contiguë avec la case de train servant au logement en vol au train d'atterrissage central.

Figure 10, selon un exemple de réalisation, un caisson de voilure (200) d'aéronef comprend un panneau extrados (210) lequel panneau est raidis par des raidisseurs longitudinaux (211), et un panneau intrados (220) également raidis par des raidisseurs longitudinaux (221). Ces deux panneaux sont couplés mécaniquement par un longeron (230) s'étendant longitudinalement et lié complètement à chacun desdits panneaux le long de ses extrémités transversales. Le longeron (230) délimite également la case de train (930) de l'aéronef (900). La case de train d'un aéronef est une zone où de nombreux systèmes sont installés et notamment des cheminements de conduits hydrauliques ou électriques. L'installation de ces systèmes et de ces conduits est grandement facilitée si les parois internes de la case de train, parmi lesquelles le longeron (230) du caisson de voilure, sont de forme simple, notamment plane.

En vol, la portance sollicite le panneau extrados (210) essentiellement en compression (2100) alors que le panneau intrados (220) est sollicité essentiellement en traction (2200). Ces sollicitations sont reprises dans lesdits panneaux notamment par les raidisseurs (211, 221) longitudinaux. Le longeron (230) étant lié aux deux panneaux (210, 220) il est sollicité essentiellement par du cisaillement (2300), prépondérant au niveau de l'axe central longitudinal (2). Une pièce composite sollicitée en cisaillement est selon l'art antérieur drapée de manière optimale en répartissant les fibres de manière équivalente dans les directions 0°, 90°, et +/- 45°, selon un drapage dit « iso ». Toutefois, ce drapage conduit dans les zones de liaisons avec les panneaux intrados et extrados à une rigidité locale réduite du longeron en comparaison avec la rigidité des panneaux qui eux sont optimisés pour résister aux sollicitations de traction/compression. Ainsi, pour assurer la compatibilité des allongements du longeron (230) et des panneaux (210, 220) à leurs interfaces de liaison, il est avantageux d'accroître la rigidité du longeron dans ces zones d'interface. En renforçant ainsi ces zones, et en les rendant moins déformables vis-à-vis de ces sollicitations, l'inertie du longeron vis-à-vis des moments de flexion autour d'un axe perpendiculaire aux axes longitudinaux (2) et transversaux (3) est augmentée sans modifier la forme de celui-ci, ce qui constitue une augmentation de rigidité, d'où un gain de masse. En revanche la zone centrale du longeron qui ne participe que très peu à l'inertie globale du caisson est avantageusement drapée selon un drapage iso reprenant ainsi au mieux les efforts de cisaillement. Le passage des zones de liaison avec les panneaux à la zone centrale doit être réalisé progressivement pour s'adapter au mieux à l'évolution progressive des sollicitations appliquées dans toute la hauteur du longeron.

Figure 11, selon un exemple de réalisation, les zones extérieures (231, 237) liées aux panneaux intrados (220) et extrados (210) sont drapées avec une proportion de fibres de 50 % à 0°, 20 % de fibres à 45°, 20 % de fibres à -45° et 10 % de fibres à 90°, la zone centrale (234) comprenant 25 % de fibres dans chacune de ces directions. Entre les deux, la rigidité est progressivement adaptée en réduisant la proportion de fibres à 0° et en augmentant corrélativement la proportion de fibres à +/- 45° et à 90°.

Ainsi, la zone (232, 236) suivant immédiatement la zone de liaison avec le panneau intrados ou le panneau extrados, comprendra 41 % de fibres à 0°, 22 % de fibres à +45°, 22 % de fibres à -45° et 15 % de fibres à 90°.

Puis, les zones (233, 235) situées immédiatement de part et d'autre de la zone centrale comprendront 34 % de fibres à 0°, 23 % de fibres à 45, 23 % de fibres à -45° et 20 % de fibres à 90°.

L'épaisseur du longeron est constante et sa forme extérieure reste plane ce qui, outre le gain de masse procuré par le mode de drapage objet de l'invention, facilite l'installation des systèmes dans la zone de case de train centrale.

La description ci-avant illustre clairement que par ses différentes caractéristiques et leurs avantages, la présente invention atteint les objectifs qu'elle s'était fixés. En particulier elle permet d'obtenir une adaptation de la rigidité d'un longeron de caisson de voilure de sorte à optimiser son inertie en flexion, uniquement par la répartition des renforts sans créer de formes complexes. Ainsi la masse d'un tel caisson de voilure est réduite et sa fabrication simplifiée en regard de l'art antérieur.

## Revendications

1. Pièce composite structurale (1, 230) à renfort fibreux comprenant une pluralité de plis orientés par rapport à une direction longitudinale (2) de ladite pièce selon des directions comprenant 0°, 90° et +/-θ, la proportion relative de plis selon l'une de ces orientations étant variable selon une direction transversale (3) de ladite pièce de sorte à adapter spatialement la rigidité de la pièce en fonction d'une distribution définie de sollicitations mécaniques selon cet axe transversal, **caractérisée en ce qu'**au moins un pli de fibres orientées selon une direction +/-θ est constitué de fibres continues s'étendant d'un bord à l'autre de la pièce sur toute la surface de celle-ci et **en ce que** l'épaisseur et le nombre de plis de ladite pièce sont constants.

2. Pièce composite selon la revendication 1 **caractérisée en ce que** θ= 45°.

3. Caisson de voilure (200) d'aéronef **caractérisé en ce qu'**il comprend :
- un panneau raidi extrados (210) et un panneau raidi intrados (220) ;
- un longeron (230) constitué d'une pièce composite selon la revendication 1 s'étendant transversalement entre les panneaux intrados (220) et extrados (210) du caisson, la direction longitudinale (2) du longeron étant sensiblement parallèle aux raidisseurs (211, 221) des panneaux extrados (210) et intrados (221) ;
ledit longeron (230) étant lié complètement aux panneaux intrados (220) et extrados (210).

4. Caisson de voilure (200) selon la revendication 3, **caractérisé en ce que** le longeron (230) comprend une proportion comprise entre 40 % et 50 % de fibres orientées à 0° dans des zones (231, 237) dites d'extrémité de largeur inférieure au quart de la largeur totale du longeron en partant de ses liaisons avec le panneau extrados (210) et avec le panneau intrados (220).

5. Caisson de voilure (200) selon la revendication 4, **caractérisé en ce que** le longeron (230) comprend entre les deux zones d'extrémité (231, 237) des zones intermédiaires (232, 233, 236, 235) dans lesquelles la proportion de fibres à 0° diminue d'une zone à l'autre en allant de la zone d'extrémité (231, 237) vers l'axe central longitudinal (3) du longeron.

6. Caisson de voilure selon la revendication 5 **caractérisé en ce que** le longeron (230) comprend une zone (234) dite centrale s'étendant de part et d'autre de l'axe central longitudinal (3) du longeron et comprenant la même proportion de fibres dans les orientations 0°, 90° et +/-θ.

7. Aéronef **caractérisé en ce qu'**il comprend un caisson de voilure (200) selon l'une quelconque des revendications 3 à 6.

## Patentansprüche

1. Verbundbauteil (1, 230) mit Faserverstärkung, die mehrere Lagen aufweist, die bezüglich einer Längsrichtung (2) des Teils in Richtungen ausgerichtet sind, die 0 ° , 90° und +/-θ beinhalten, wobei der relative Anteil von Lagen mit einer dieser Ausrichtungen in Abhängigkeit von einer Querrichtung (3) des Teils variabel ist, um die Steifigkeit des Teils in Abhängigkeit von einer definierten Verteilung mechanischer Beanspruchungen entlang dieser Querachse räumlich anzupassen, **dadurch gekennzeichnet, dass** mindestens eine Lage von Fasern, die in einer Richtung +/-θ ausgerichtet sind, aus kontinuierlichen Fasern besteht, die sich auf der gesamten Fläche des Teils von einem Rand desselben zum anderen erstrecken, und dadurch, dass die Dicke und die Anzahl der Lagen konstant sind.

2. Verbundteil nach Anspruch 1, **dadurch gekennzeichnet, dass** θ = 45° ist.

3. Flügelkasten (200) eines Luftfahrzeugs, **dadurch gekennzeichnet, dass** er aufweist:
- eine versteifte Platte der Druckseite (210) und eine versteifte Platte der Saugseite (220);
- einen Längsträger (230), der aus einem Verbundteil nach Anspruch 1 besteht und sich in Querrichtung zwischen der Platte der Saugseite (220) und der Platte der Druckseite (210) des Kastens erstreckt, wobei die Längsrichtung (2) des Längsträgers im Wesentlichen parallel zu den Versteifungselementen (211, 221) der Platten der Druckseite (210) und der Saugseite (220) ist;
wobei der Längsträger (230) vollständig mit den Platten der Saugseite (220) und der Druckseite (210) verbunden ist.

4. Flügelkasten (200) nach Anspruch 3, **dadurch gekennzeichnet, dass** der Längsträger (230) in sogenannten Endbereichen (231, 237) mit einer Breite, die kleiner als ein Viertel der Gesamtbreite des Längsträgers ist, beginnend bei seinen Verbindungen mit der Platte der Druckseite (210) und der Platte der Saugseite (220), einen zwischen 40 % und 50 % betragenden Anteil an Fasern mit einer Ausrichtung von 0° aufweist.

5. Flügelkasten (200) nach Anspruch 4, **dadurch gekennzeichnet, dass** der Längsträger (230) zwischen den zwei Endbereichen (231, 237) Zwischenbereiche (232, 233, 236, 235) aufweist, in denen sich der Anteil an Fasern mit 0° von dem Endbereich (231, 237) zu der Mittellängsachse (3) des Längsträgers hin von einem Bereich zum anderen verringert.

6. Flügelkasten nach Anspruch 5, **dadurch gekennzeichnet, dass** der Längsträger (230) einen sogenannten mittleren Bereich (234) aufweist, der sich beiderseits der Mittellängsachse (3) des Längsträgers erstreckt und den gleichen Anteil an Fasern mit den Ausrichtungen 0°, 90° und +/-θ aufweist.

7. Luftfahrzeug, **dadurch gekennzeichnet, dass** es einen Flügelkasten (200) nach einem der Ansprüche 3 bis 6 aufweist.

## Claims

1. Composite structural part (1, 230) having a fibrous reinforcement comprising a multiplicity of plies oriented with respect to a longitudinal direction (2) of said part, in directions comprising 0°, 90° and +/-θ, it being possible for the relative proportion of plies in one of these orientations to vary along a transverse direction (3) of said part so as to spatially adapt the rigidity of the part as a function of a defined distribution of mechanical loads along this transverse axis, **characterized in that** at least one ply of fibres oriented in a direction +/-θ consists of continuous fibres extending from one edge of the part to the other, over the entire surface area of this part, and **in that** the thickness and the number of plies of said part are constant.

2. Composite part according to Claim 1, **characterized in that** θ = 45°.

3. Wing box (200) of an aircraft, **characterized in that** it comprises:
- a stiffened suction-side panel (210) and a stiffened pressure-side panel (220);
- a spar (230) consisting of a composite part according to Claim 1 extending transversely between the pressure-side panel (220) and the suction-side panel (210) of the box, the longitudinal direction (2) of the spar being essentially parallel to the stiffeners (211, 221) of the suction-side panel (210) and the pressure-side panel (220);
said spar (230) being completely connected to the pressure-side panel (220) and the suction-side panel (210).

4. Wing box (200) according to Claim 3, **characterized in that** the spar (230) comprises a proportion between 40% and 50% of fibres oriented at 0° in regions (231, 237), termed end regions, whose width is less than a quarter of the total width of the spar, from its connections with the suction-side panel (210) and with the pressure-side panel (220).

5. Wing box (200) according to Claim 4, **characterized in that** the spar (230) comprises, between the two end regions (231, 237), intermediate regions (232, 233, 236, 235) in which the proportion of fibres at 0° diminishes from one region to the other, proceeding from the end region (231, 237) to the central longitudinal axis (3) of the spar.

6. Wing box according to Claim 5, **characterized in that** the spar (230) comprises a region (234), termed the central region, which extends on either side of the central longitudinal axis (3) of the spar and which comprises the same proportion of fibres in the orientations 0°, 90° and +/-θ.

7. Aircraft **characterized in that** it comprises a wing box (200) according to any one of Claims 3 to 6.
